# EUROPEAN PATENT SPECIFICATION

(11) **EP 3 998 202 B1**
(45) Date of publication and mention of the grant of the patent: **06.03.2024**
(21) Application number: 21158199.6
(22) Date of filing: 19.02.2021
(51) Int. Cl.: B64C 17/02, B64C 29/00, B64C 39/08, B64C 39/12, B64D 27/24

(54) **AIRCRAFT, COMPRISING A BATTERY ASSEMBLY**
FLUGZEUG MIT EINER BATTERIEANORDNUNG
AÉRONEF COMPRENANT UN ENSEMBLE DE BATTERIES

(43) Date of publication of application: 18.05.2022
(73) Proprietor: Lilium eAircraft GmbH, 82234 Wessling (DE)
(72) Inventor: MÖBIUS, Andreas, 81667 München (DE); PITRE, Ryan, 82234 Wessling (DE); PLAZA, Angel, 82234 Wessling (DE)
(74) Representative: Weickmann & Weickmann PartmbB

(56) References cited:
- WO-A2-2011/023396
- CN-A- 108 688 803
- US-A1- 2018 273 198
- US-A1- 2020 023 983
- US-B1- 10 543 905

## Description

The present invention relates to an aircraft, comprising a fuselage, at least one pair of wings and a battery assembly for providing power to electrical systems of the aircraft.

During the planning, design and development stages of aircrafts, the expected center of gravity of the aircraft can be calculated or at least estimated. However, due to tolerances in the exact dimensions and weights of the components employed for actually assembling the aircraft and due to unanticipated changes later on in the development, the center of gravity thereof may deviate from the targeted or expected center of gravity. Since the position of the center of gravity is of utmost importance, both directly and indirectly, for the stability, maneuverability and operability of an aircraft, being able to adjust said position within a certain range is an important factor during the latter stages of aircraft development programs in order to achieve the expected overall performance of the aircraft.

While conventional aircrafts with piston or jet engines are equipped with fuel tanks in which fuel can be reallocated in order to trim the corresponding aircraft, thus shifting its center of gravity, in electrically powered aircrafts such a procedure is not possible. Furthermore, small general aviation aircrafts sometimes also comprise trim weights, which can be used in operation to slightly alter the position of the center of gravity, since in said types of aircrafts, the operational center of gravity envelopes tend to be rather small. However, applying trim weights after the final assembly of an aircraft leads to additional weight and does not provide a wide range of center of gravity adjustment capabilities, either.

Thus, the techniques currently used for adjusting the center of gravity of aircrafts either rely on the reallocating of fuel between different tank units within the aircraft, add additional weight to the aircraft or narrow the center of gravity envelope in its operation.

Furthermore, reference shall be made to prior art documents US 2018/0273198 A1, US 2020/0023983 A1, WO 2011 /023396 A2, CN 108 688 803 A and US 10 543 905 B1, all of which also describe different techniques for adjusting the centers of gravity of aircraft.

It is therefore the object of the present invention to provide an aircraft, in which the center of gravity can be adjusted without the above-cited drawbacks of approaches known from the prior art, while relying on the battery assemblies which are present in all modern types of electric aircrafts for storing and providing power to electrical systems of the aircraft and in particular in electrical propulsion types thereof, in which due to the higher requirements concerning battery capacity, large and heavy battery assemblies are employed.

In order to solve the above-cited problem, the aircraft according to the present invention is constructed such that the battery assembly comprises a number of individual battery modules which are directly or indirectly coupled to one another and its fuselage is provided with a mounting assembly with a number of mounting positions for each holding one of the battery modules, and wherein the number of mounting positions is larger than the number of battery modules, such that in the mounted state of all battery modules, at least one of the mounting positions remains vacant, thus defining a placement configuration of the battery modules and the vacant mounting positions.

The present invention is thus based on the fact that high-capacity battery assemblies are usually not constructed monolithically, but comprise a number of individual battery modules, which in the configuration of an aircraft according to the present invention may be positioned according to different mounting positions in the mounting assembly located within the fuselage of the aircraft in order to adjust its center of gravity.

While it is usually desired to have as large a battery capacity in the aircraft as possible, since in the aircraft according to the present invention the vacant mounting positions hardly add any additional weight to the aircraft, the benefits of being able to adjust the center of gravity of the aircraft by means of relocating the battery modules and thus where applicable indirectly also the vacant mounting positions within the mounting assembly can be achieved without any major drawbacks and with almost the same mass per unit of electrical capacity of the mounting assembly and battery modules combined as compared with a smaller mounting assembly, in which no vacant mounting positions are provided.

While in certain configurations of the aircraft according to the present invention it might be beneficial to have at least two different kinds of battery modules in order to increase flexibility of the dimensions of the mounting assembly which thus for example may comprise mounting positions with different dimensions at different locations with respect to the fuselage, in a particularly simple and flexible embodiment, all of the battery modules may be substantially identical at least with respect to their outer dimensions. Thus, all of the battery modules as well as the vacant mounting positions in such an embodiment are freely interchangeable, and maximum flexibility concerning the configuration of the battery modules within the mounting assembly is achieved.

While the layout or the positioning of the possible mounting positions in the mounting assembly can be chosen almost arbitrarily and for example the spacing between possible mounting positions can also be smaller than the dimensions of the individual battery modules, comparable to mounting racks for electrical components known in the art, which allow for a positioning of the components with a granularity smaller than the dimensions of the components, in another particularly simple embodiment, the mounting assembly may be arranged such that the spacing between the mounting positions substantially corresponds to the dimensions of the battery modules, thus defining individual slots for the battery modules in accordance with their dimensions, which can either be loaded with a battery module or can be vacant.

Additionally or alternatively, the mounting positions may be provided in at least two layers with respect to the vertical axis of the aircraft and/or in at least two rows with respect to the width axis of the aircraft and/or in at least two rows with respect to the longitudinal axis of the aircraft. Herein the vertical, width and longitudinal axes of the aircraft may correspond to the yaw, pitch and roll axes of the internal coordinate system of the aircraft, respectively.

In different embodiments of the present invention, the individual battery modules may be electrically connected to one another and to other systems of the aircraft in different manners, and in particular the battery modules may be directly interconnected with one another or the respective connections may be established via individual connections of each battery module to the mounting assembly. In any case, at least one dummy module is provided, preferably one dummy module per vacant mounting position. Herein, the at least one dummy module comprises connection points identical to the battery modules as well as internal wiring in order to establish a coupling between neighboring battery modules. While the dummy modules could make use of a casing to resemble the battery modules and potentially facilitate their mounting in case this is favored in a particular embodiment, in order to further safe weight, in alternative embodiments they may also merely consist of the components necessary to bridge connections from one of the modules to the next, for example just two cables.

Thus, for example in configurations, in which all of the battery modules are connected in series, said dummy modules may act to provide the serial connection between its neighboring battery modules while not contributing to the overall voltage themselves in a way an actual battery module would while adding only minimal weight due to them not comprising any heavy interior components.

While in principle any type of aircraft may be provided with a battery assembly according to the present invention, and while further in principle no restrictions concerning the wing configuration or propulsion type thereof have to be made, aircrafts according to certain embodiments of the present invention may further comprise at least one additional pair of wings or canard wings, wherein an intended center of gravity of the aircraft may be positioned between the pairs of wings with respect to the longitudinal axis of the aircraft and/or the aircraft may be of the electrical propulsion type.

Additionally, the present invention relates to a method for installing the battery assembly in an aircraft according to the invention, comprising the steps of determining the center of gravity of the aircraft in a state, in which all of the battery modules are unmounted, determining a possible placement configuration of the battery modules and the vacant mounting positions, in which the resulting center of gravity of the aircraft fulfils at least one condition concerning a predetermined intended center of gravity of the aircraft, and mounting the battery modules and the at least one dummy module in the mounting assembly according to the possible placement configuration. Thus, the mounting of the battery modules according to the possible placement configuration can relate to positioning them in certain well-defined mounting positions or in positions along the at least one displacement direction of the displacement assembly.

Therein, the possible placement configuration may for example demand that the center of gravity of the aircraft is within a given range in at least one dimension with respect to the internal coordinate system of the aircraft, such that a number of possible placement configurations may be conceivable per aircraft.

However, it might also be possible to determine an optimal placement configuration, in which the determined center of gravity is closest to the predetermined intended center of gravity according to at least one metric and to thus mount the battery modules in the mounting assembly according to the optimal placement configuration. In this embodiment, the at least one metric may be the distance between the center of gravity of the optimal placement configuration and the predetermined intended center of gravity in one or more dimensions, such that with an exact or heuristic algorithm the optimal placement configuration can be found among all possible or conceivable configurations.

Lastly, the possible placement configuration or the optimal placement configuration may have to fulfil at least one additional condition unrelated to the center of gravity of the aircraft, such as for example it may be required not to have two vacant mounting positions next to each other in the mounting assembly or that the first and last mounting position of the mounting assembly in each direction has to be occupied by a battery module in order to ensure correct interconnections among the battery modules and with the remaining electrical system of the aircraft.

Additional features and advantages of the present invention will become even clearer from the following description of an embodiment thereof if taken together with the accompanying figures, which show in particular:
- Fig. 1: a schematic view of an aircraft according to a first embodiment of the present invention; and
- Fig. 2a and Fig 2b: two variations of an aircraft, the first one according to a second embodiment of the present invention, the second one a comparative example which does not fall within the scope of the claims, each in schematic cross-section views.

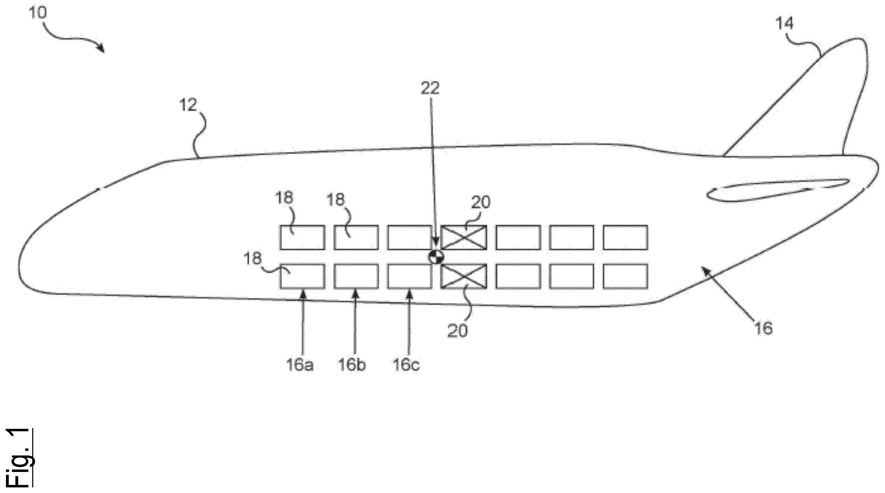

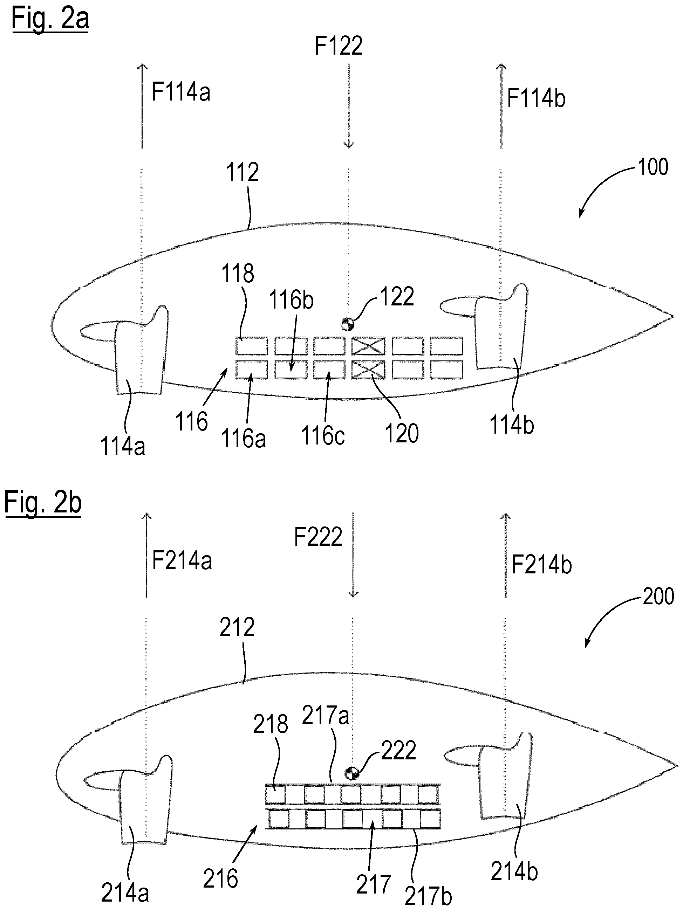

In Fig. 1, the aircraft according to the first embodiment of the present invention is generally referred to with reference numeral 10 and comprises a fuselage 12 as well as a pair of wings 14. While the embodiment of Fig. 1 is depicted with only a single pair of wings 14, in other embodiments of the present invention, the aircraft 10 may also comprise at least one additional pair of wings or canards as will be described below with reference to figures 2a and 2b.

In the fuselage 12, a mounting assembly 16 is provided, which comprises a number of mounting positions 16a, 16b, 16c, ... each adapted to hold one battery module 18. In the embodiment shown in Fig. 1, in the vertical direction two layers of mounting positions are provided, each comprising seven individual mounting positions along a row in the longitudinal direction of the aircraft 10, resulting in fourteen mounting positions. However, there are no restrictions on the number of mounting positions and their relative orientation in different embodiments of the invention.

On the other hand, only twelve battery modules 18 are provided, such that two of the mounting positions remain vacant. Said two vacant mounting positions are denoted with reference numeral 20 in Fig. 1. In order to adjust the center of gravity 22 of the aircraft 10 during its final assembly, the battery modules 18, which are all identical with respect to their outer dimensions, can be freely assigned to the fourteen available mounting positions of the mounting assembly 16, such that the vacant mounting positions 20 are positioned accordingly. Said vacant mounting positions 20 are loaded with dummy modules with comprise connection points identical to the battery modules as well as internal wiring in order to establish a coupling between neighboring battery modules.

The present invention may thus be used to correct deviations between the intended center of gravity and the actual center of gravity of the aircraft 10 by mounting the battery modules 16a, 16b, 16c,... according to an optimal or at least a possible placement configuration which fulfils at least one condition concerning the predetermined intended center of gravity and possibly further at least one additional condition unrelated to the center of gravity of the aircraft.

Two further variations of an aircraft, the first one according to the present invention, and the other one according to a comparative example not falling within the scope of the claims, are further shown in Fig. 2a and 2b and denoted with reference numerals 100 and 200, respectively. Therein, components which are similar or equivalent to the ones provided in the embodiment of Fig. 1 are denoted with the same reference numerals increased by 100 and 200 and the following description of the aircrafts 100 and 200 mainly concerns their differences to aircraft 10 while for the sake of brevity, for the description of similar or equivalent components thereof it is referred to the description of the corresponding components of aircraft 10 above.

One of the main differences between the aircraft 10 of Fig. 1 and the aircrafts 100, 200 of Fig. 2a and 2b is that instead of a single pair of wings 14, two pairs of wings 114a, 114b and 214a, 214b are provided in each of them in order to facilitate vertical or at least short take-off and landing capabilities with engines providing thrust mounted on each wing in a rotatable manner with respect to the fuselage. In order to illustrate said capabilities, propulsion vectors F114a, F114b, F214a and F214b are shown, which counteract the gravitational forces F122, F222 acting on the respective centers of gravity 122, 222.

While the center of gravity of aircraft 100 of Fig. 2a can be adjusted between the pairs of wings 114a, 114b by means of the mounting assembly 116 in a similar manner as with the mounting assembly 16 of aircraft 10 of Fig. 1, in aircraft 200 a modified mounting assembly 216 is used, in which the battery modules 218 are not positioned in well-defined mounting positions but may be displaced along at least one direction. Therefore, said mounting assembly 216 comprises a displacement assembly 217, in turn comprising two rail systems 217a and 217b, which each allow for a displacement of the battery modules 218 along the longitudinal direction of airplane 200 and to lock them at predetermined positions in order to adjust the center of gravity 222.

As can be seen in Fig. 2b, the battery modules 218 associated with upper rail system 217a are displaced with respect to the battery modules 218 associated with the lower rail system 217b while the distances among the battery modules associated with each rail system 217a, 217b are kept substantially uniform, for example by means of spacer or connector elements. In further variations of this comparative aircraft, said distances may also be adjustable and/or the rail systems may also allow adjustments of the positions of the battery modules 218 in additional directions, such as along a width or vertical axis of the airplane 200.

## Claims

1. Aircraft (10; 100), comprising a fuselage (12; 112; 212), at least one pair of wings (14; 114a, 114b) and a battery assembly for providing power to electrical systems of the aircraft (10; 100; 200), wherein:
- the battery assembly comprises a number of individual battery modules (18; 118) which are directly or indirectly coupled to one another;
- the fuselage (12; 112) is provided with a mounting assembly (16; 116) with a number of mounting positions (16a, 16b, 16c; 116a, 116b, 116c) for each holding one of the battery modules (18; 118; 218);
and wherein
- the number of mounting positions (16a, 16b, 16c; 116a, 116b, 116c) is larger than the number of battery modules (18; 118) such that in a mounted state of all battery modules (18), at least one of the mounting positions (16a, 16b, 16c; 116a, 116b, 116c) remains vacant (20; 120) thus defining a placement configuration of the battery modules (18; 118) and the vacant mounting positions (20; 120);
**characterized by**:
at least one dummy module, preferably one dummy module per vacant mounting position (20; 120), and in that the at least one dummy module comprises connection points identical to the battery modules (18; 118) as well as internal wiring in order to establish coupling between neighboring battery modules (18; 118).

2. Aircraft (10; 110) according to claim 1, wherein:
all of the battery modules (18; 118) are substantially identical at least with respect to their outer dimensions and/or main interfaces.

3. Aircraft (10; 110) according to any of the preceding claims, wherein:
the mounting assembly (16; 116) is arranged such that the spacing between the mounting positions (16a, 16b, 16c, 116a, 116b, 116c) substantially corresponds to the dimensions of the battery modules (18; 118).

4. Aircraft (10; 100) according to any of the preceding claims, wherein:
the mounting positions (16a, 16b, 16c; 116a, 116b, 116c) are provided in at least two layers with respect to the vertical axis of the aircraft (10; 110) and/or in at least two rows with respect to the width axis of the aircraft (10; 110) and/or in at least two rows with respect to the longitudinal axis of the aircraft (10; 110).

5. Aircraft (100) according to any of the preceding claims, further comprising:
at least one additional pair of wings (114a) or canard wings, wherein an intended center of gravity (122) of the aircraft (100) is positioned between the pairs of wings (114a, 114b) with respect to the longitudinal axis of the aircraft (100).

6. Aircraft (10; 100) according to any of the preceding claims, wherein:
the aircraft is of the electrical propulsion type.

7. Method for installing the battery assembly in an aircraft (10; 100) according to any of the preceding claims, comprising the following steps:
- determining the center of gravity of the aircraft (10; 100) in a state in which all of the battery modules (18; 118) are unmounted;
- determining a possible placement configuration of the battery modules (18; 118) and the vacant mounting positions (20; 120) in which the resulting center of gravity of the aircraft (22; 122) fulfills at least one condition concerning a predetermined intended center of gravity; and
- mounting the battery modules (18; 118) and the at least one dummy module in the mounting assembly (16; 116;) according to the possible placement configuration.

8. Method according to claim 7, further comprising the step of:
- determining an optimal placement configuration, in which the resulting center of gravity (22; 122) is closest to the predetermined intended center of gravity according to at least one metric; and
- mounting the battery modules (18; 118) in the mounting assembly (16; 116) according to the optimal placement configuration.

9. Method according to claim 7 or claim 8, wherein:
the possible placement configuration or the optimal placement configuration has to fulfil at least one additional condition unrelated to the center of gravity (22; 122) of the aircraft (10; 100).

## Patentansprüche

1. Flugzeug (10; 100), umfassend einen Rumpf (12; 112; 212), wenigstens ein Paar von Flügeln (14; 114a; 114b) und eine Batterieanordnung zum Bereitstellen von Leistung an elektrische Systeme des Flugzeugs (10; 100; 200), wobei:
- die Batterieanordnung eine Anzahl von individuellen Batteriemodulen (18; 118) umfasst, welche direkt oder indirekt miteinander gekoppelt sind;
- der Rumpf (12; 112) mit einer Montageanordnung (16; 116) mit einer Anzahl von Montagepositionen (16a, 16b, 16c; 116a, 116b, 116c) bereitgestellt ist, jede für ein Halten eines der Batteriemodule (18; 118; 218);
und wobei
- die Anzahl der Montagepositionen (16a, 16b, 16c; 116a, 116b, 116c) größer als die Anzahl der Batteriemodule (18; 118) ist, so dass in einem montierten Zustand von allen Batteriemodulen (18) wenigstens eine der Montagepositionen (16a, 16b, 16c; 116a, 116b, 116c) frei bleibt (20; 120), wodurch eine Platzierungskonfiguration der Batteriemodule (18; 118) und der freien Montagepositionen (20; 120) definiert wird;
**gekennzeichnet durch**:
wenigstens ein Blindmodul, vorzugsweise ein Blindmodul pro freier Montageposition (20; 120), und **dadurch, dass**
das wenigstens eine Blindmodul Verbindungspunkte, welche identisch zu den Batteriemodulen (18; 118) sind, sowie eine interne Verkabelung umfasst, um eine Kopplung zwischen benachbarten Batteriemodulen (18; 118) herzustellen.

2. Flugzeug (10; 110) nach Anspruch 1, wobei:
alle der Batteriemodule (18; 118) im Wesentlichen identisch wenigstens hinsichtlich ihrer äußeren Abmessungen und/oder Haupt-Schnittstellen sind.

3. Flugzeug (10; 110) nach einem der vorhergehenden Ansprüche, wobei:
die Montageanordnung (16; 116) derart eingerichtet ist, dass der Abstand zwischen den Montagepositionen (16a, 16b, 16c; 116a, 116b, 116c) im Wesentlichen den Abmessungen der Batteriemodule (18; 118) entspricht.

4. Flugzeug (10; 100) nach einem der vorhergehenden Ansprüche, wobei:
die Montagepositionen (16a, 16b, 16c; 116a, 116b, 116c) in wenigstens zwei Schichten bezüglich der vertikalen Achse des Flugzeugs (10; 110) und/oder in wenigstens zwei Reihen bezüglich der Breitenachse des Flugzeugs (10; 110) und/oder in wenigstens zwei Reihen bezüglich der longitudinalen Achse des Flugzeugs (10; 110) bereitgestellt sind.

5. Flugzeug (100) nach einem der vorhergehenden Ansprüche, ferner umfassend:
wenigstens ein zusätzliches Paar von Flügeln (114a) oder Entenflügeln, wobei ein vorgesehener Schwerpunkt (122) des Flugzeugs (100) zwischen den Paaren von Flügeln (114a, 114b) bezüglich der longitudinalen Achse des Flugzeugs (100) positioniert ist.

6. Flugzeug (10; 100) nach einem der vorhergehenden Ansprüche, wobei:
das Flugzeug vom elektrisch angetriebenen Typ ist.

7. Verfahren für ein Installieren der Batterieanordnung in einem Flugzeug (10; 100) nach einem der vorhergehenden Ansprüche, umfassend die folgenden Schritte:
- Bestimmen des Schwerpunkts des Flugzeugs (10; 100) in einem Zustand, in welchem alle der Batteriemodule (18; 118) entfernt sind;
- Bestimmen einer möglichen Platzierungskonfiguration der Batteriemodule (18; 118) und der freien Montagepositionen (20; 120), in welcher der resultierende Schwerpunkt des Flugzeugs (22; 122) wenigstens eine Bedingung hinsichtlich eines vorbestimmten vorgesehenen Schwerpunkts erfüllt; und
- Montieren der Batteriemodule (18; 118) und des wenigstens einen Blindmoduls in der Montageanordnung (16; 116) gemäß der möglichen Platzierungskonfiguration.

8. Verfahren nach Anspruch 7, ferner umfassend den Schritt:
- Bestimmen einer optimalen Platzierungskonfiguration, in welcher der resultierende Schwerpunkt (22; 122) am nächsten zu dem vorbestimmten vorgesehenen Schwerpunkt gemäß wenigstens einer Metrik ist; und
- Montieren der Batteriemodule (18; 118) in der Montageanordnung (16; 116) gemäß der optimalen Platzierungskonfiguration.

9. Verfahren nach Anspruch 7 oder Anspruch 8, wobei:
die mögliche Platzierungskonfiguration oder die optimale Platzierungskonfiguration wenigstens eine zusätzliche Bedingung zu erfüllen hat, welche nicht mit dem Schwerpunkt (22; 122) des Flugzeugs (10; 100) in Zusammenhang steht.

## Revendications

1. Aéronef (10 ; 100), comprenant un fuselage (12 ; 112 ; 212), au moins une paire d'ailes (14 ; 114a, 114b) et un ensemble de batteries destiné à fournir de la puissance à des systèmes électriques de l'aéronef (10 ; 100 ; 200), dans lequel :
- l'ensemble de batteries comprend un certain nombre de modules de batterie (18 ; 118) individuels qui sont directement ou indirectement couplés les uns aux autres ;
- le fuselage (12 ; 112) est pourvu d'un ensemble de montage (16 ; 116) comportant un certain nombre de positions de montage (16a, 16b, 16c ; 116a, 116b, 116c) destinées à maintenir individuellement l'un des modules de batteries (18 ; 118 ; 218) ;
et dans lequel
- le nombre de positions de montage (16a, 16b, 16c ; 116a, 116b, 116c) est supérieur au nombre de modules de batterie (18 ; 118) de sorte que, dans un état monté de tous les modules de batterie (18), au moins l'une des positions de montage (16a, 16b, 16c ; 116a, 116b, 116c) demeure vacante (20 ; 120) définissant ainsi une configuration d'implantation des modules de batterie (18 ; 118) et des positions de montage vacantes (20 ; 120) ;
**caractérisé par** :
au moins un module fictif, de préférence un module fictif par position de montage vacante (20 ; 120), et
en ce que l'au moins un module fictif comprend des points de connexion identiques à ceux des modules de batterie (18 ; 118) de même qu'un câblage interne afin d'établir un couplage entre des modules de batterie (18 ; 118) voisins.

2. Aéronef (10 ; 110) selon la revendication 1, dans lequel :
tous les modules de batterie (18 ; 118) sont sensiblement identiques au moins par rapport à leurs dimensions extérieures et/ou à leurs interfaces principales.

3. Aéronef (10 ; 110) selon l'une quelconque des revendications précédentes, dans lequel :
l'ensemble de montage (16 ; 116) est conçu de sorte que l'espacement entre les positions de montage (16a, 16b, 16c ; 116a, 116b, 116c) corresponde sensiblement aux dimensions des modules de batterie (18 ; 118).

4. Aéronef (10 ; 110) selon l'une quelconque des revendications précédentes, dans lequel :
les positions de montage (16a, 16b, 16c ; 116a, 116b, 116c) sont prévues sur au moins deux couches par rapport à l'axe vertical de l'aéronef (10 ; 110) et/ou sur au moins deux rangées par rapport à l'axe de largeur de l'aéronef (10 ; 110) et/ou sur au moins deux rangées par rapport à l'axe longitudinal de l'aéronef (10 ; 110).

5. Aéronef (100) selon l'une quelconque des revendications précédentes, comprenant en outre :
au moins une paire d'ailes supplémentaires (114a) ou plan canard, dans lequel un centre de gravité voulu (122) de l'aéronef (100) est positionné entre les paires d'ailes (114a, 114b) par rapport à l'axe longitudinal de l'aéronef (100) .

6. Aéronef (10 ; 110) selon l'une quelconque des revendications précédentes, dans lequel :
l'aéronef est du type à propulsion électrique.

7. Procédé d'installation de l'ensemble de batteries dans un aéronef (10 ; 100) selon l'une quelconque des revendications précédentes, comprenant les étapes suivantes consistant à :
- déterminer le centre de gravité de l'aéronef (10 ; 100) dans un état dans lequel aucun de tous les modules de batterie (18 ; 118) n'est monté ;
- déterminer une configuration d'implantation possible des modules de batterie (18 ; 118) et des positions de montage vacantes (20 ; 120) dans laquelle le centre de gravité obtenu de l'aéronef (22 ; 122) satisfait à au moins une condition concernant un centre de gravité voulu prédéterminé ; et
- monter les modules de batterie (18 ; 118) et l'au moins un module fictif dans l'ensemble de montage (16 ; 116) conformément à la configuration d'implantation possible.

8. Procédé selon la revendication 7, comprenant en outre l'étape consistant à :
- déterminer une configuration d'implantation optimale, dans laquelle le centre de gravité obtenu (22 ; 122) est le plus proche du centre de gravité voulu prédéterminé conformément à au moins une mesure ; et
- monter les modules de batterie (18 ; 118) dans l'ensemble de montage (16 ; 116) conformément à la configuration d'implantation optimale.

9. Procédé selon la revendication 7 ou la revendication 8, dans lequel :
la configuration d'implantation possible ou la configuration d'implantation optimale doit satisfaire à au moins une condition supplémentaire non associée au centre de gravité (22 ; 122) de l'aéronef (10 ; 100).
